# EUROPEAN PATENT APPLICATION

(11) **EP 2 075 929 A1**
(43) Date of publication of application: **01.07.2009**
(21) Application number: 06811979.1
(22) Date of filing: 18.10.2006
(51) Int. Cl.: H04B 7/26, H04B 7/15

(54) **WIRELESS BASE STATION, RELAY STATION, WIRELESS RELAY SYSTEM AND WIRELESS RELAY METHOD**

(71) Applicant: Fujitsu Limited, Kawasaki-shi, Kanagawa 211-8588 (JP)
(72) Inventor: SUGA, Junichi, Kawasaki-shi Kanagawa 211-8588 (JP)
(74) Representative: Stebbing, Timothy Charles
(86) International application number: PCT/JP2006/320786
(87) International publication number: WO 2008/047429

(57) **Abstract**

A radio base station for performing communication with a radio terminal via a relay station, including a radio frame generation unit which generates a radio frame including a signal relay region allocated in the relay station to transmit received data with predetermined delay from the radio terminal or the radio base station to the radio base station or the radio terminal respectively, and a data relay region allocated in the relay station to perform demodulation and decode, further encode and modulation processing for receive data and to transmit from the radio terminal or the radio base station to the radio base station or the radio terminal respectively; and a transmission unit which transmits the generated radio frame to the relay station.

## Description

### TECHNICAL FIELD

The present invention relates to a radio base station, relay station, radio relay system, and radio relay method using radio communication, and more particularly to a radio base station, relay station, radio relay system, and radio relay method in which processing delay is reduced and a radio resource can be used with maximum efficiency.

### BACKGROUND

IEEE 802.16WG specifies IEEE 802.16d, which concerns point-to-multi-point communication (e.g. see the following Non-patent Document 1), and IEEE 802.16e, which concerns mobile communication (e.g. see the following Non-patent Document 2) as examples of radio communication systems.

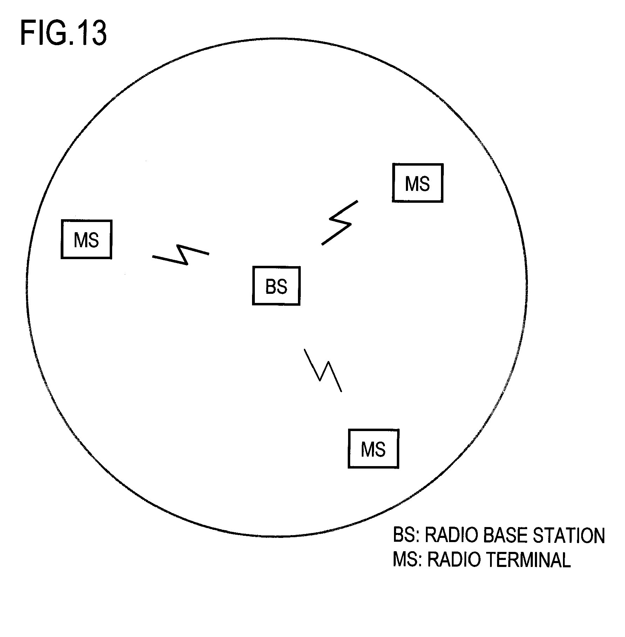

Fig. 13 depicts an image of the services provided according to IEEE 802.16d and IEEE 802.16e. These services are based on a P-MP (Point-to-Multi-point) communication, where a plurality of terminals MS are connected to one radio base station BS.

In this way IEEE 802.16d or the like is based on the P-MP connection, so the service area is limited to a cover area (cell) covered by the radio base station BS, and the communication rate drops at the cell edge.

To solve this problem, in IEEE 802.16WG, a relay station to relay communication between the radio base station and radio terminals is under consideration (IEEE 802.16j).

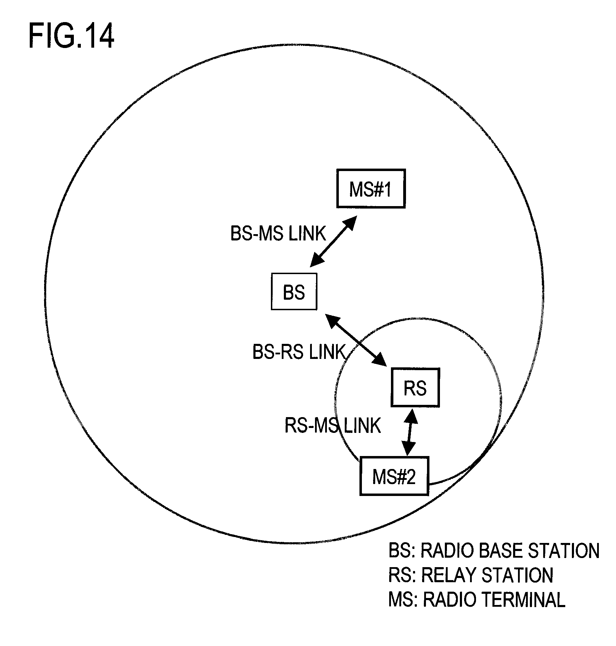

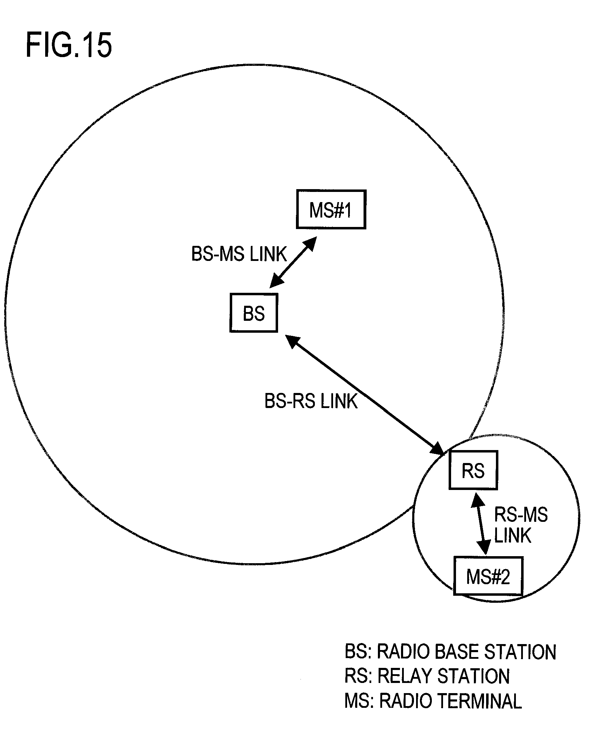

Fig. 14 and Fig. 15 depict examples of a radio communication system in which the relay station is introduced.

As Fig. 14 depicts, the radio terminal MS#2 near the cell edge communicates via the relay station RS. By improving the radio quality between the radio base station BS and the relay station RS and between the relay station RS and the radio terminal MS#2, throughput can be improved compared with the case of the radio terminal MS#2 directly communicating with the radio base station BS.

Also as depicted in Fig. 15, a service area of the radio base station BS can be expanded by the radio base station BS communicating with the radio terminal MS#2, which is positioned in an area which cannot be covered by the radio base station BS, by way of the radio station RS.

Available relay method in the relay station RS are a method of relaying a receive signal by re-transmitting the receive signal without demodulation and decoding (Amplifier and Forward: AF method), and a method of relaying receive signal by demodulating and decoding the receive signal, encoding and modulating the decoded data again, and transmitting the data (Decode and Forward: DF method) (e.g. see the following Non-patent Document 3).

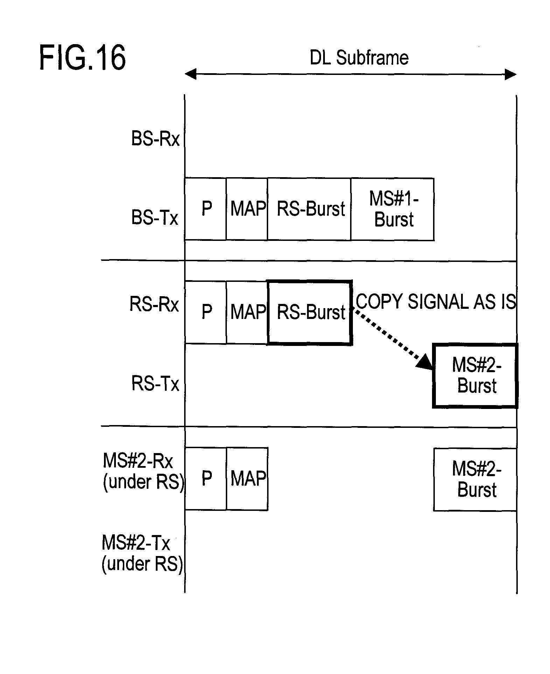

Fig. 16 is an example of data transmission and reception based on radio frame, depicting the AF method. As depicted in Fig. 16, according to the AF method, in the relay station RS, receive signal from the radio base station BS is not demodulated or decoded, and is sent to the radio terminal MS#2 in an area of the relay station RS after amplifying the transmission power. In this case, the processing delay is small since the relay station RS does not demodulate or decode the transmission signal, and does not perform encoding and modulation processing either. In uplink as well, the relay station RS does not demodulate or decode receive signal from the radio terminal MS#2, but retransmits the receive signal as is, thereby a relay to the radio base station BS is executed.

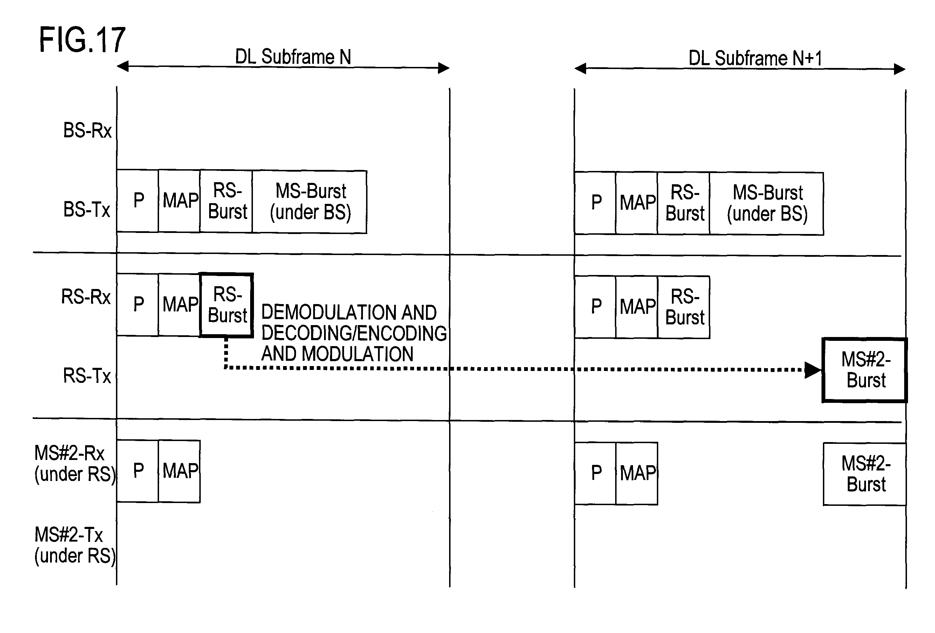

Fig. 17 depicts an example of data transmission and reception based on radio frame, depicting the DF method. As depicted in Fig. 17, according to the DF method, in the relay station RS, receive signal from the radio base station BS is demodulated (and preferably decoded) to obtain receive data, and this data is (preferably encoded and) modulated, and is sent within the area of the relay station RS. In this case, demodulation (decoding) processing is performed, so transmission quality can be improved since the signal, distorted by the influence of the propagation path, can be restored to the original form and then be relayed. In uplink as well, the relay station RS demodulates (and decodes) receive signal from the radio terminal MS#2 to obtain data, performs (encoding and) modulation processing on this data, and sends the data to the radio base station BS side.
Non-patent Document 1: IEEE Std. 802.16-2004
Non-patent Document 2: IEEE Std. 802.16e-2005
Non-patent Document 3: J. N. Laneman, D. Tse and G. W. Wornell, "Cooperative diversity in wireless networks: efficient protocols and outage behavior", IEEE Trans. Inform. Theory, Vol. 50, pp. 3062 - 2084, Dec. 2004

As mentioned above, there are two methods when data is relayed: retransmitting received signal without demodulating and decoding the received signal; and obtaining receive data by demodulating and decoding received signal, and then retransmitting the data after performing encoding and modulation again.

In terms of processing delay, the latter has a disadvantage, but in terms of quality, the former has a disadvantage, so it is difficult to improve quality while suppressing the processing delay.

### DISCLOSURE OF THE INVENTION

It is an object in one aspect of the present invention to perform an ideal relay using these methods with skill.

According to an aspect of the present invention, a radio base station for performing communication with a radio terminal via a relay station, including a radio frame generation unit which generates a radio frame including a signal relay region allocated in the relay station to transmit received data with predetermined delay from the radio terminal or the radio base station to the radio base station or the radio terminal respectively, and a data relay region allocated in the relay station to perform demodulation and decode, further encode and modulation processing for receive data and to transmit from the radio terminal or the radio base station to the radio base station or the radio terminal respectively; and a transmission unit which transmits the generated radio frame to the relay station.

According to another aspect of the present invention, a relay station for relaying communication with a radio terminal and a radio base station, including a reception unit which receives a radio frame including a signal relay region and a data relay region; and a sort unit which, in the signal relay region, transmits received data with predetermined delay from the radio terminal or the radio base station to the radio base station or the radio terminal respectively, and, in the data relay region, performs demodulation and decode, further encode and modulation processing for receive data and transmits from the radio terminal or the radio base station to the radio base station or the radio terminal respectively.

According to another aspect of the present invention, a radio relay system for performing communication with a radio terminal and a radio base station via a relay station, a radio frame generation unit in the radio base station, which generates a radio frame including a signal relay region and a data relay region; a transmission unit in the radio base station, which transmits the generated radio frame to the relay station; a reception unit in the relay station, which receive the radio frame; a sort unit in the relay station, which, in the signal relay region, transmits received data with predetermined delay from the radio terminal or the radio base station to the radio base station or the radio terminal, and, in the data relay region, performs demodulation and decode, further encode and modulation processing for receive data and transmits from the radio terminal or the radio base station to the radio base station or the radio terminal respectively.

According to another aspect of the present invention, a radio relay method for performing communication with a radio terminal and a radio base station via a relay station, including generating a radio frame including a signal relay region and a data relay region in the radio base station; transmitting the generated radio frame to the relay station in the radio base station; a reception unit in the relay station, which receives the radio frame; transmitting in the signal relay region received data with predetermined delay from the radio terminal or the radio base station to the radio base station or the radio terminal; and performing demodulation and decode, further encode and modulation processing for receive data from the radio terminal or the radio base station, and transmitting, in the data relay region, to the radio base station or the radio terminal respectively, in the relay station.

According to the present invention, an ideal relay can be implemented. Also a radio base station, relay station, radio relay system, and radio relay method, which can decrease processing delay for data which has strict delay restrictions, and can improve quality for data for which delay is more tolerated, can be provided.

### BRIEF DESCRIPTION OF THE DRAWINGS

Fig. 1A and Fig. 1B depict configuration examples of a radio frame;
Fig. 2 depicts an example of relaying data of a radio frame in the downlink direction;
Fig. 3 depicts an example of data transmission and reception in the downlink direction;
Fig. 4 depicts an example of a sequence to collect line quality information;
Fig. 5 depicts a block diagram depicting a configuration example of a radio base station;
Fig. 6 depicts a flow chart depicting an example of processing in the radio base station;
Fig. 7 depicts an example of a format of a signal relay area communication message;
Fig. 8 depicts an example of burst allocation;
Fig. 9 is a block diagram depicting a configuration example of a relay station;
Fig. 10 is a flow chart depicting an example of processing in the relay station;
Fig. 11 depicts an example of sorting data to a signal relay area and data relay area;
Fig. 12 depicts an example of sorting data to a signal relay area and data relay area;
Fig. 13 depicts an example of a service image;
Fig. 14 depicts an example of a radio communication system where a relay station is introduced;
Fig. 15 depicts an another example of a radio communication system where a relay station is introduced;
Fig. 16 depicts an example of data transmission and reception using a radio frame; and
Fig. 17 depicts an example of data transmission and reception using a radio frame.

### BEST MODE FOR CARRYING OUT THE INVENTION

The embodiment(s) focuses on the existence of data which is strictly restricted in delay (e.g. VoIP data for which real-time processing is required), and data which delay is more tolerated, in data transmitted/received between a radio base station BS and radio terminal MS.

A best mode for carrying out the present invention will now be described.

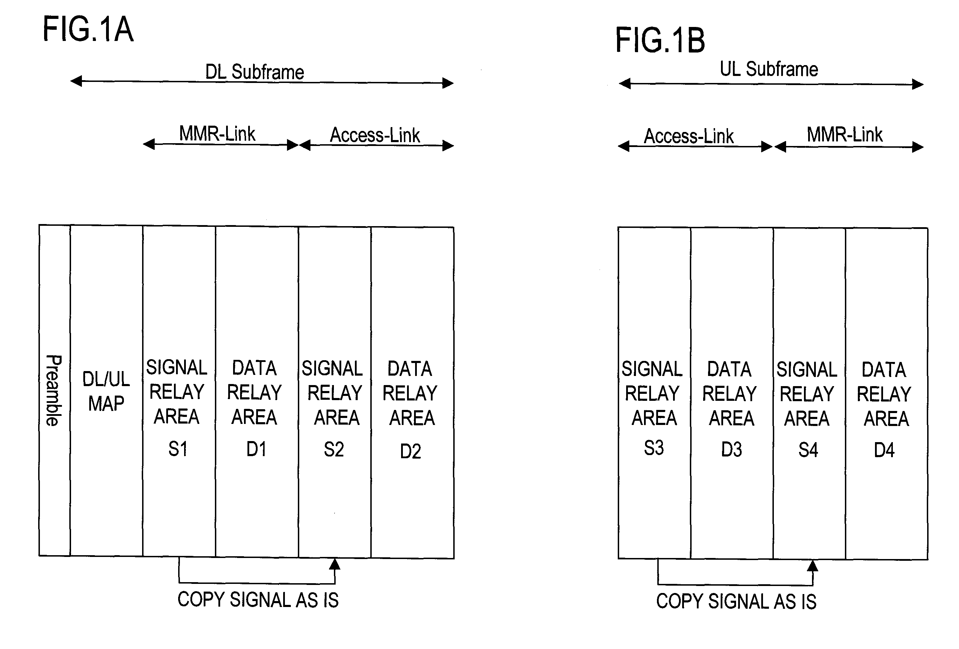

Fig. 1A depicts a configuration example of a radio frame in the downlink direction (downlink sub-frame "DL-Sub-frame") according to the present embodiment, and Fig. 1B depicts a configuration example of a radio frame in the uplink direction (uplink sub-frame "UL-Sub-frame") according to the present embodiment. The MMR-Link indicates communication between a radio base station and relay station, and Access-Link indicates communication between a relay station and the radio terminal. This radio relay system is a relay system included in the radio terminal and radio base station via relay station.

According to the present embodiment, the radio frame is divided into signal relay areas S1 to S4 for relaying the radio frame using the AF method, and data relay areas D1 to D4 for relaying the radio frame using the DF method.

As depicted in Fig. 1A, the radio frame in the downlink direction includes a first signal relay area S1 and a first data relay area D1 which the relay station receives from the radio base station, and a second signal relay area S2 and a second data relay area D2 which the relay station sends to the radio terminal.

The second signal relay area S2 and the second data relay area D2 are disposed at positions shifted from the first signal relay area S1 and first data relay area D1 for a predetermined slot time respectively.

S2, in which the signal of S1 is retransmitted using the AF method, is set in a same sub-frame, as depicted in Fig. 1A. If the predetermined slot time is insufficient, S2 and D2 are switched in the format depicted in Fig. 1A, thereby a time difference between S1 and S2 can be secured to be more than the predetermined slot time. Another example to secure the predetermined time is to insert the data relay areas (D1 and D2 in this case) between the signal relay areas S1 and S2.

On the other hand, as depicted in Fig. 1B, the radio frame in the uplink direction includes a third signal relay area S3 and a third data relay area D3 which the relay station receives from the radio terminal, and a fourth signal relay area S4 and a fourth data relay area D4 which the relay station sends to the radio base station.

The fourth signal relay area S4 and the fourth data relay area D4 are disposed at positions shifted from the third signal relay area S3 and the third data relay area D3 for a predetermined slot time respectively.

The methods to secure the predetermined time, described for the case of downlink, can also be used here. Read the above description, substituting S1 and S2 with S3 and S4 respectively, and D1 and D2 with D3 and D4 respectively.

In the radio frame, an area other than the signal relay areas S1 to S4 may be used for the data relay areas D1 to D4, or for the transmission and reception of the relay station and radio terminal under the radio base station. The present embodiment(s) describes the signal relay areas S1 to S4 and data relay areas D1 to D4 as depicted in Fig. 1A, so as to simplify description.

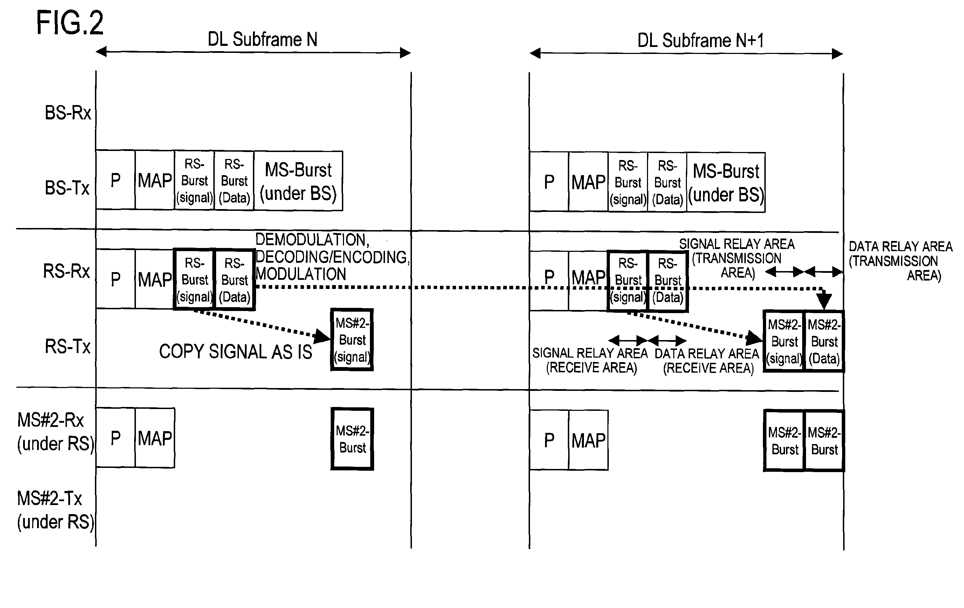

Fig. 2 depicts an example of data transmission and reception in the radio frame constructed as above.

The radio base station BS sends a radio frame, which is divided into a signal relay area ("RS-Burst (signal)" in Fig. 2) and a data relay area ("RS-Burst (data)" in Fig. 2), to the relay station at the Nth frame.

The relay station RS receives signal from the radio base station BS in the first signal relay area S1, and sends the received signal to the radio terminal MS#2 in the second signal relay area S2 in the same radio frame. At this time, the relay station RS performs required signal amplification processing without performing demodulation and modulation processing, and sends the signal in the second signal relay area S2.

In other words, the relay station RS sends the signal received from the radio base station BS in the signal relay area (first signal relay area S1) of the MMR-Link of the downlink sub-frame to the radio terminal MS in the signal relay area (second signal relay area S2) of Access-Link in the same radio frame. The relay processings in the first and second signal relay areas in the relay station RS are performed in the same radio frame. The transmission may be performed in the next frame if a delay is within tolerance.

On the other hand, the relay station RS receives signal from the radio base station BS in the first data relay area D1, performs demodulation (and decoding more preferably) on the received signal, then performs (encoding more preferably) and demodulation processing on the signal, and sends it to the radio terminal MS#2.

In other words, the relay station RS performs demodulation and so on, on the signal received from the radio base station BS in the data relay area (first data relay area D1) of the MMR-Link of the downlink sub-frame, for example, and sends the signal to the radio terminal MS in the data relay area (second data relay area D2) of Access-Link in the radio frame.

In the case of uplink as well, the relay station RS sends signal from the radio terminal MS to the radio base station BS in the same radio frame in the signal relay area (third and fourth signal relay areas S3 and S4), performs demodulation and so on in the data relay area (third and fourth data relay areas D3 and D4), and sends to the radio base station BS.

As described above, in the present embodiment(s), the radio frame including the signal relay areas S1 to S4 and data relay areas D1 to D4 is constructed to transmit and receive data and signals, so the data in the signal relay areas S1 to S4 is not demodulated and so on in the relay station RS, and is sent to the radio terminal MS, so processing delays can be decreased and requirements for data which has strict delay restrictions (e.g. data which requires real-time processing, such as VoIP data) can be satisfied. Data in the data relay areas D1 to D4 are communicated in the relay station RS using a radio communication method matching each link, so the quality can be improved, and a radio resource can be used with maximum efficiency.

In this case, with the DF method, relay is not performed in the same radio frame, but the relay station RS sends the received data in the data relay area (second data relay area D2) of Access-Link in a subsequent radio frame, as depicted in Fig. 2. In the case of the example in Fig. 2, the received data is sent in the next frame (N + 1). Needless to say, the data may be sent in an even later frame if it takes more time to demodulate and decode the data. In other words, it is preferable that the transmission is performed after n frame (m < n) in the case of data relay, if the transmission is performed after m frame in the case of signal relay.

This is because real-time processing is secured for signal relay with respect to data relay.

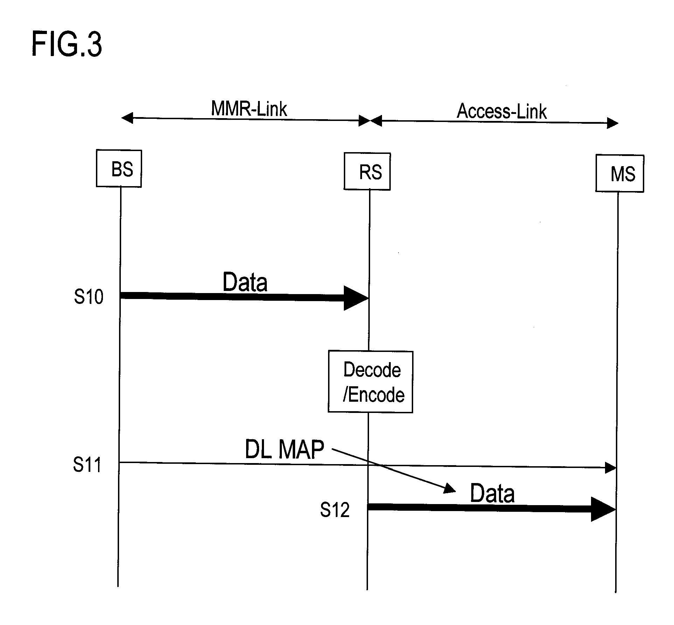

Fig. 3 depicts an example of data transmission and reception when this processing delay is considered. As depicted in Fig. 3, when MAP data is generated and sent from the radio base station BS in S11, the radio base station BS first sends the data to the relay station RS (S10). Then the radio base station BS sends MAP data (S11), and the relay station RS sends the data sent from the radio base station BS to the radio terminal MS (S12). Considering processing delay in the relay station RS, the radio base station BS sends the data to the relay station RS in advance. When "Data" in S10 is sent, the transmission timing of the data is notified by using DL-MAP to the relay station RS. The data transmission and reception considering the processing delay is exactly the same in the case of uplink.

In the signal relay areas S1 to S4, the same radio communication method (modulation method and encoding method) is used for MMR-Link and Access-Link. This is because in each case of the AF method, the relay station RS sends the signal received from a transmission station (the radio base station BS or radio terminal MS) to a receive station (the radio terminal MS or radio base station BS). If the signal relay areas S1 to S4 are used for data transmission and reception, it is preferable to determine a radio communication method in an area by comparing the respective line qualities (e.g. QPSK, 16QAM) of MMR-Link and Access-Link, so as to match the lower line quality. This is because matching the radio communication method with the lower line quality can suppress the generation of errors in the communication between the radio base station BS and radio terminal MS.

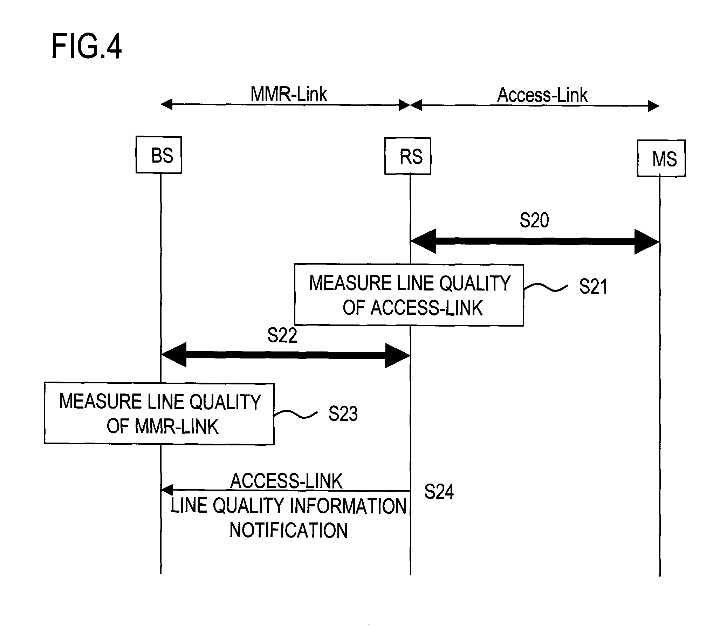

Fig. 4 depicts an example of the sequence for the radio base station BS to collect the line quality information of each link of MMR-Link and Access-Link. In order to determine the radio communication method to match the lower line quality, the line quality of each link must be compared. In the present embodiment(s), the line quality of MMR-Link is measured under control of the radio base station BS, and the line quality of Access-Link is measured under control of the relay station RS.

As depicted in Fig. 4, the relay station RS measures the line quality of Access-Link (S21) using communication with the radio terminal MS (S20). The line quality can also be measured by having the radio terminal MS report the received line quality to the relay station RS. The radio base station BS measures the line quality of MMR-Link, and acquires the line quality information (S23) using communication with the relay station RS (S22). The relay station RS sends the measured line quality information of Access-Link to the radio base station BS (S24). The radio base station BS determines the radio communication method in the signal relay areas S1 to S4 so as to match the lower line quality, based on the line quality information of both links. The information on the determined radio communication method is included in DL-MAP or UL-MAP, and is sent to the relay station RS, for example. Based on this information, the relay station RS communicates with the radio terminal MS and radio base station BS.

If a same signal (robust signal, such as BPSK (Binary Phase Shift Keying)) is used for all radio terminals MS, for the radio communication method used for the signal relay areas S1 to S4, the line quality need not be measured or compared.

On the other hand, for the radio communication method in the data relay areas (D1 to D4), it may be determined to match the respective line quality of MMR-Link and Access-Link. This is because the relay station RS performs processing of demodulation and decoding, and encoding and modulation that match each link, as mentioned above. Therefore one link need not be concerned with the line quality of the other link. Since the radio communication method in each data relay area is determined to match the respective line quality, the radio resource can be used efficiently.

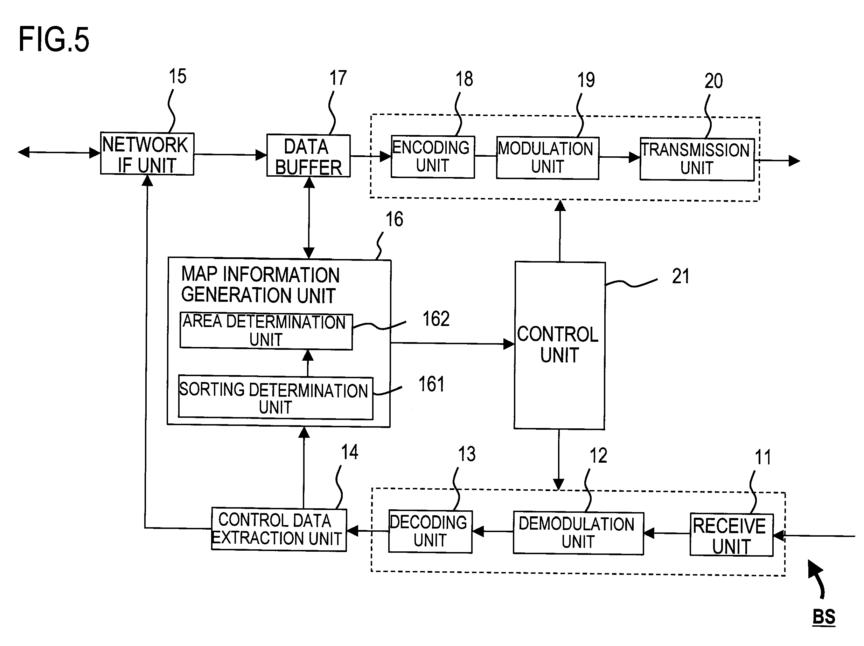

Now the configuration and operation of the radio base station BS will be described with reference to Fig. 5 to Fig. 8. Fig. 5 depicts a configuration example of the radio base station BS.

The radio base station BS includes a receive unit 11, demodulation unit 12, decoding unit 13, control data extraction unit 14, network interface (IF) unit 15, MAP information generation unit 16, data buffer 17, encoding unit 18, modulation unit 19, transmission unit 20, and control unit 21. The MAP information generation unit 16 further includes a sorting determination unit 161 and area determination unit 162.

The receive unit 11 receives a data packet, control message (e.g. band request, ranging) or the like from the relay station RS and radio terminal MS. By the control of the control unit 21, the data packet and so on is demodulated by the demodulation unit 12, and is decoded by the decoding unit 13.

The control data extraction unit 14 outputs the control message to the MAP information generation unit 16, and outputs the data packet to the network IF unit 15. The network IF unit 15 outputs the data packet to a host IP (Internet Protocol) network.

The MAP information generation unit 16 generates MAP information, such as DL-MAP and UL-MAP, based on the status of the data buffer 17, the control message, and the sorting determination unit 161 of the MAP information generation unit 16 determines which data is transmitted and received in the signal relay areas S1 to S4, or transmitted and received in the data relay areas D1 to D4, thereby data is sorted. The area determination unit 162 determines which areas in the radio frame become the signal relay areas S1 to S4 and data relay areas D1 to D4. The area is determined based on the data and signal amount of data and signal respectively, and so on.

Then the MAP information generation unit 16 generates MAP information (UL-MAP and DL-MAP) considering the radio frame which includes the signal relay areas S1 to S4 and data relay areas D1 to D4. The MAP information is stored in the data buffer 17, along with other data (transmission data to the relay station, and transmission data to the radio terminal MS).

The area determination unit 162 may only determine the signal relay areas S1 to S4, regarding other areas as the data relay areas D1 to D4. Instead of the sorting determination unit 161 and area determination unit 162 creating MAP information in which the signal relay areas S1 to S4 and data relay areas D1 to D4 are specified, a MAC Management Message specifying these areas (hereafter called a signal relay area notification message) may be created.

The MAP information stored in the data buffer 17 is sent to the relay station RS and radio terminal MS via the encoding unit 18, modulation unit 19, and transmission unit 20, along with other data.

When transmission is performed in the signal relay areas S1 and S2 (downlink), the signal, which is sent in the area, is encoded in the encoding unit 18 and modulated in the modulation unit 19, so as to match with the lower line quality of MMR-Link and Access-Link.

When reception is performed in the third and fourth signal relay areas S3 and S4 (uplink) as well, the signal is demodulated in the demodulation unit 12 and decoded in the decoding unit 13, so as to match with the lower line quality of each link. The control unit 21 controls this demodulation and so on by controlling the demodulation unit 12, decoding unit 13, encoding unit 18, modulation unit 19, and so on.

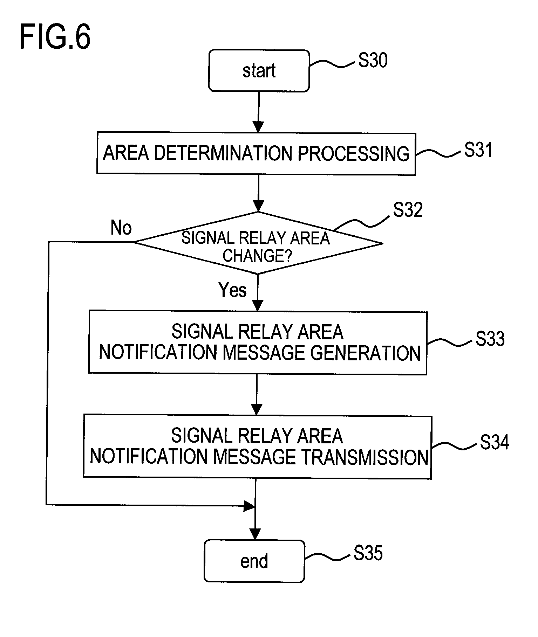

Fig. 6 is a flow chart depicting an example of processing in the radio base station BS. In this example, the signal relay areas S1 to S4 and data relay areas D1 to D4 are specified using the signal relay area notification message. This is also the same for the case of using MAP information.

When processing starts (S30), the MAP information generation unit 16 performs the area determination processing (S31), and generates the signal relay area notification message specifying the signal relay areas S1 to S4 and data relay areas D1 to D4.

If it is necessary to change the signal relay areas S1 to S4 (Yes in S32), the signal relay area notification message specifying the changed signal relay areas S1 to S4 is generated in the MAP information generation unit 16 (S33), and is sent via MMR-Link by controlling in the control unit 21 (S34). And the processing ends (S35). The signal relay area notification message can be stored in the data relay area and sent, for example. This is because it is more convenient to send the message in the data area to acquire processing time to receive the message in the relay station RS. However, the message need not be sent to the radio terminal MS, so preferably this should be outside the target of the relay.

If there is not change in the signal relay areas S1 to S4 (No in S32), it is unnecessary to change the areas generated by the area determination processing (S31), and processing ends as is (S35).

The signal relay areas S1 to S4 are changed when the data volume is changed or when the operator performs manual operation, for example. This change is executed by the control unit 21 acquiring this information and notifying this information to the MAP information generation unit 16.

This flow chart is based on the assumption that change is generated only in the signal relay areas S1 to S4, but this is because if the signal relay areas S1 to S4 are determined, the rest of the areas are assumed to be the data relay areas D1 to D4. In other words, the signal relay notification message is for notifying the boundary of the signal relay areas and data relay areas out of the transmission areas of the signals (signals to be transmitted via MMR-Link) from the radio base station BS to the relay station RS, and for notifying the boundary of the signal relay areas and data relay areas out of the transmission areas of the access link. Uplink is the same as this.

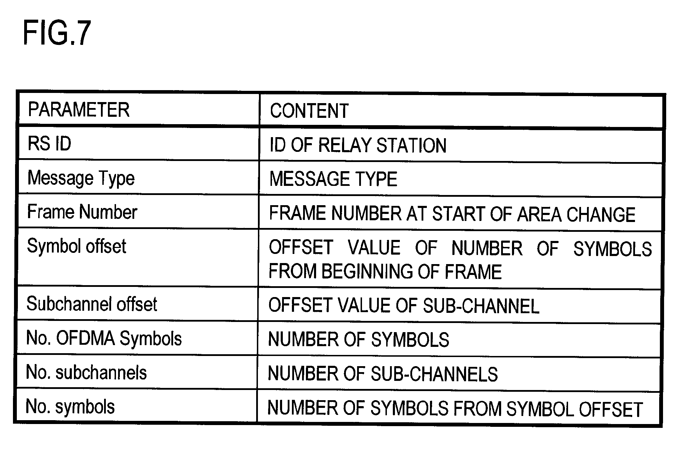

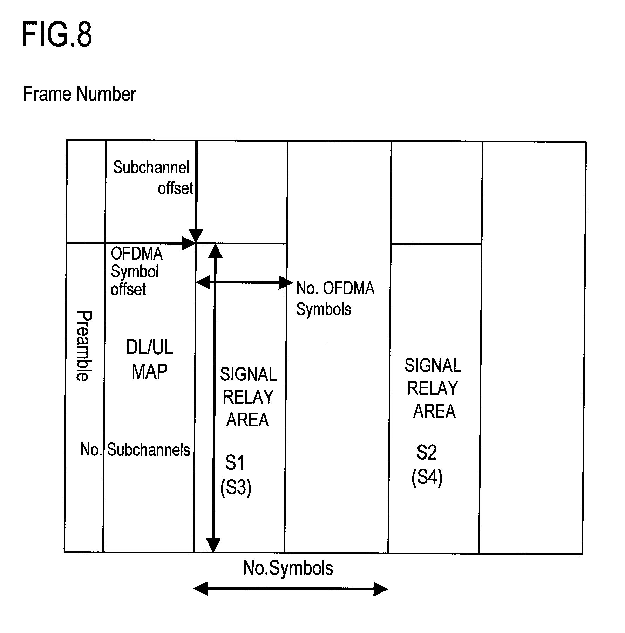

Fig. 7 depicts an example of a format of the signal relay area notification message, and Fig. 8 depicts an example of the area allocation of the radio frame constructed based on this message.

The start point of the first signal relay area S1 (or third signal relay area S3) as depicted in Fig. 8 is determined by "Symbol Offset" and "Sub-channel Offset" in Fig. 7. The width (number of symbols) in the time axis direction in the first signal relay area S1 and so on in Fig. 8 is determined by "No. OFDMA Symbols" in Fig. 7, and the width in the frequency axis direction in the first signal relay area S1 and so on in Fig. 8 is determined by "No. Subchannels" in Fig. 7.

Also according to the present embodiment(s), the number of symbols from the start point of the first signal relay areas S1 and so on to the second signal relay area S2 (or fourth signal relay area S4) in the time axis direction is defined as "No. Symbols" in the signal relay area notification message. In other words, "No. Symbols" defines the number of symbols (or time) to be shifted when received data is sent. By notifying this number of symbols to the relay station RS as the signal relay area notification message, data can be sent from the relay station RS to the radio terminal MS using the second signal relay area S2, and data can be sent from the relay station RS to the radio base station BS using the fourth signal relay area S4.

The signal relay areas S1 to S4 can be determined according to the data volume of the data transmitted and received in this area. For example, if the data volume is high, a large area is secured for the first signal relay area S1 and the second signal relay area S2 according to the data volume. These signal relay areas S1 to S4 are determined according to the data volume in the area determination unit 162.

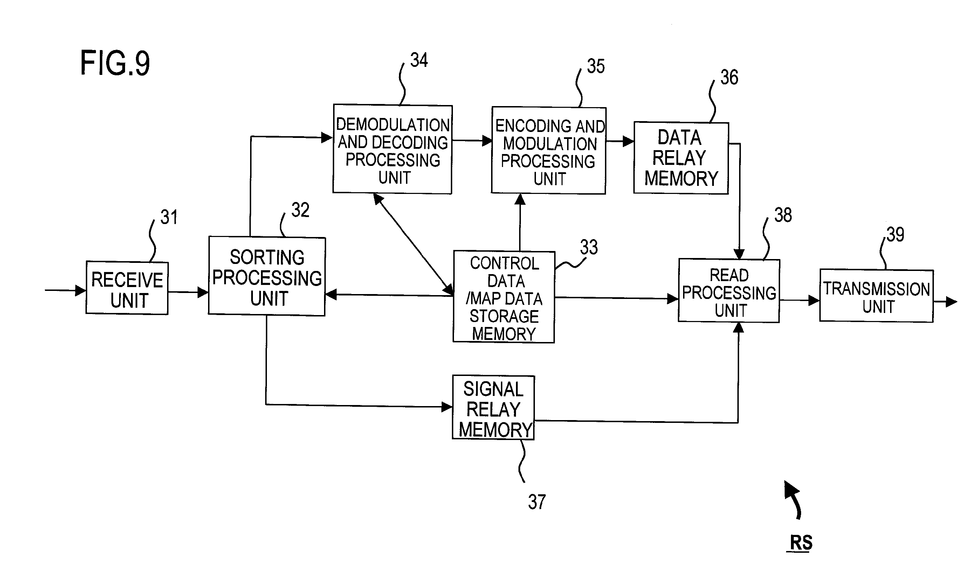

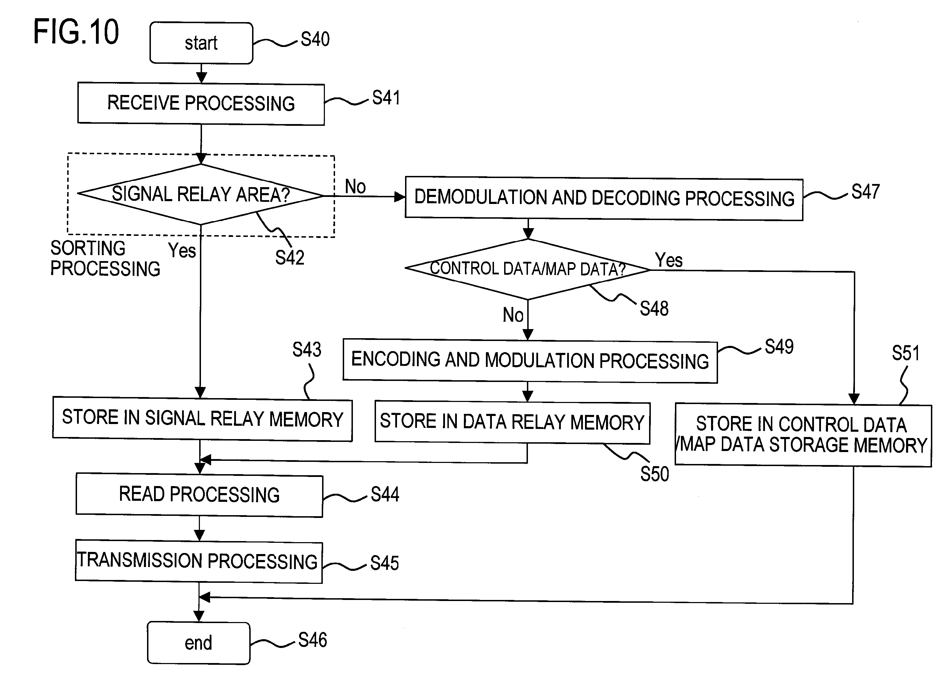

Now the configuration and operation of the relay station RS will be described with reference to Fig. 9 and Fig. 10. Fig. 9 depicts a configuration example of the relay station RS.

The relay station RS includes a receive unit 31, sorting processing unit 32, storage memory 33, demodulation and decoding processing unit 34, encoding and modulation processing unit 35, data relay memory 36, signal relay memory 37, read processing unit 38, and transmission unit 39. The decoding and encoding may be emitted.

The receive unit 31 receives control messages, MAP information (or signal relay area notification message), and other data from the radio base station BS. The control messages and MAP information are demodulated and decoded by the demodulation and decoding processing unit 34 via the sorting processing unit 32, and are stored in the storage memory 33.

The sorting processing unit 32 sorts data received by the receive unit 31 based on the control data (signal relay notification message) or MAP information stored in the storage memory 33. The sorting processing unit 32 outputs the data received in the first and third signal relay areas S1 and S4 to the signal relay memory 37, and outputs the data received in the first and third data relay areas D1 and D3 to the demodulation and decoding processing unit 34.

The demodulation and decoding unit 34 demodulates and decodes data from the sorting processing unit 32, and performs modulation and decoding processing based on the MAP information stored in the storage memory 33. Demodulation and decoding are performed using a demodulation and decoding method which is set in advance between the radio base station BS and relay station RS, and the relay station RS and radio terminal MS respectively.

The encoding and modulation processing unit 35 encodes and modulates data from the demodulation and decoding processing unit 34. In this case as well, this processing is performed based on the MAP information. The modulation and encoding is performed using an optimum modulation method and encoding method between the relay station RS and radio base station BS, and between the relay station RS and radio terminal MS respectively.

The data relay memory 36 temporarily stores data from the encoding and modulation processing unit 35. The signal relay memory 37 temporarily stores data from the sorting processing unit 32.

The read processing unit 38 reads data from the signal relay memory 37 at a timing of the signal relay area (second signal relay area S2 and fourth signal relay area S4) of the radio frame. The read processing unit 38 reads data from the data relay memory 36 at a timing of the data relay area (second data relay area D2 and fourth data relay area D4) of the radio frame. The read data is sent to the radio terminal MS and radio base station BS via the transmission unit 39.

In terms of processing delay, it is not desirable that the positions of the signal relay areas S1 to S4 are written in the MAP information and signal relay area notification message, and the relay station RS performs relay processing by changing the signal relay areas S1 to S4 and data relay areas D1 to D4 for each radio frame, so as to match with the MAP information or the like. Therefore it is preferable to switch the signal relay areas S1 to S4 every several frames. In this case, the radio base station BS must notify the relay station RS in advance about the switching timing and signal relay areas S1 to S4. For example, in the flow chart depicted in Fig. 6, the radio base station BS changes the signal relay areas (S32) every several frames, and sends the MAP information and signal relay area notification message to the relay station RS, and based on this information stored in the storage memory 33 of the relay station RS, the sorting processing unit 32 sorts data.

Fig. 10 is a flow chart depicting a processing example in the relay station RS.

When processing starts (S40), the receive unit 31 performs receive processing (S42).

Then the sorting processing unit 32 sorts data by judging whether the data is data of the signal relay area (first or third signal relay area S1, S3), referring to the control data / MAP information (S42).

If the received data is data of the signal relay area (Yes), the data is stored in the signal relay memory 37 (S43). This data is read at a timing of the second or fourth signal relay area S2 or S4 (S44), and sent (S45), and the series of processing ends (S46).

On the other hand, if the received data is not data of the signal relay area (No in S42), the received data is demodulated (and decoded if necessary) (S47).

If the demodulated (and decoded) data is control data or MAP information (Yes in S48), control data is stored in the storage memory 33 (S51), and processing ends (46).

If the demodulated and decoded data is not control data or MAP data (No in S48), the demodulated and decoded data is (encoded and) modulated (S49), and the data is stored in the data relay memory 36 (S50). The data is read at a timing of the second or fourth data relay area D2 or D4, and sent, and the series of processing ends (S44 to S46).

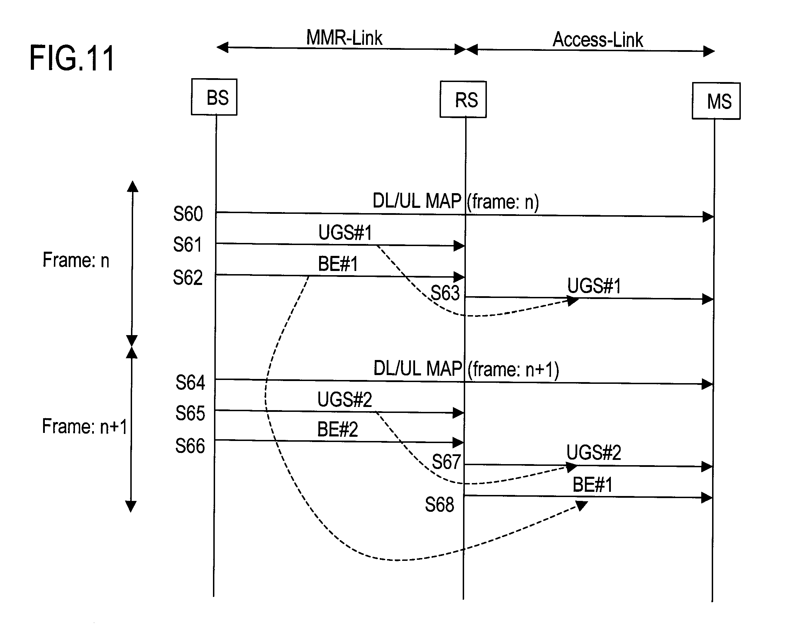

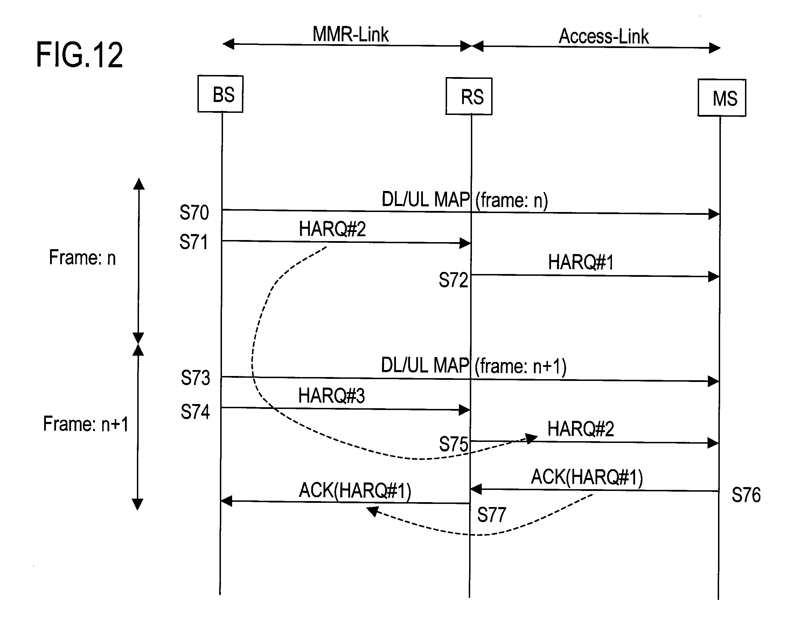

Fig. 11 and Fig. 12 depict examples of sorting data for the signal relay areas S1 to S4 and data relay areas D1 to D4.

Fig. 11 is an example of sorting data for the areas according to QoS (Quality of Service) classes. Out of the QoS classes, UGS (Unsolicited Grant Service) is a class that requires real-time processing, such as the case of VoIP (Voice over Internet Protocol). Therefore UGS data is relayed using the signal relay areas S1 to S4, which can relay data immediately.

On the other hand, BE (Best Effort) is a class used for the Web and FTP (File Transfer Protocol), where some delay is tolerated. Therefore relay using the data areas D1 to D4 is performed so that a radio resource can be used efficiently.

As depicted in Fig. 11, the radio base station BS sends MAP information which is divided into signal relay areas S1 to S4 and data relay areas D1 to D4 (S60, S64), the relay station RS receives UGS data in the first signal relay area S1 (S61, S65), and receives BE data in the first data area D1 (S62, S66).

Then the relay station RS sends the UGS data in the second signal relay area S2 (S63), and sends the BE data which was received in the previous frame, in the second data area D2 of the next frame (S68).

For example, out of the QoS classes, data in the rtPS (Real-Time Polling Service) class may be sent and received in the signal relay areas S1 to S4, and data in the nrtPS (Non-Real-Time Polling Service) class may be sent and received in the data relay areas D1 to D4.

Fig. 12 is an example of relaying a response to the HARQ data using the signal relay areas S1 to S4. If an error occurs during the transmission of the HARQ data, an immediate retransmission is required. Therefore the response to the HARQ data is immediately returned to the transmission source using the signal relay areas S1 to S4.

As depicted in Fig. 12, the HARQ data is sent from the radio base station BS to the radio terminal MS via the relay station RS, using the data relay areas D1 to D4 (S71, S72). The response signal or response message (ACK/NACK) to this HARQ data is returned to the radio base station BS using the third and fourth signal relay areas S3 and S4 (S76, S77).

The sort of control system information such as control signal or control message transmitted and received in the signal relay area S1 to S4, and data system information such as user data and so on transmitted and received in the data relay area D1 to D4, can be performed on the basis of the data system information and signal system information. The sort is performed by the sorting determination unit 161.

Thereby the time required for retransmission can be decreased compared with the case of performing all of the relays in the data relay areas D1 to D4.

For example, FAST FEEDBACK data, which sends channel information on the radio terminal MS and retransmission request information to the radio base station BS, may also be relayed using the signal relay areas S1 to S4.

The same control signals for all radio terminals MS may be relayed using the signal relay areas S1 to S4.

Also all the data in the downlink direction may be transmitted and received in the data relay areas D1 to D4, and all the data in the uplink direction may be transmitted and received in the signal relay areas S1 to S4.

### INDUSTRIAL APPLICABILITY

The present invention is suitable for application to radio communication between a radio terminal and radio base station via a relay station.

## Claims

1. A radio base station for communicating with a radio terminal via a relay station, comprising:
a radio frame generation unit which generates a radio frame including a signal relay area including signal which the relay station transmits without performing demodulation and modulation, and a data relay area including signal which the relay station transmits after performing demodulation and modulation; and
a transmission unit which transmits the generated radio frame to the relay station.

2. The radio base station according to Claim 1, wherein a radio communication method according to a lower line quality, of a line quality between the radio base station and relay station, and a line quality between the relay station and radio terminal at a destination of relay signal from the relay station, is selected as a radio communication method in the signal relay area.

3. The radio base station according to Claim 1, wherein a radio communication method according to a line quality between the radio base station and relay station, is selected as a radio communication method in the data relay area.

4. The radio base station according to Claim 1, wherein the radio frame generation unit including a sorting determination unit which determines data to be sorted into the signal relay area, and an area determination unit which determines the signal relay area in the radio frame.

5. The radio base station according to Claim 4, wherein the sorting determination unit sorts data on the basis of data type of control information and data information, and type of QoS class.

6. A relay station for relaying communication between a radio terminal and a radio base station, comprising:
a receive unit which receives radio frame which includes a signal relay area and data relay area; and
a transmission unit which transmits receive signal received in the signal relay area without performing demodulation and modulation, and transmits signal which includes data received in the data relay area after performing demodulation and modulation.

7. The relay station according to Claim 6, wherein the receive-signal is transmitted in a same radio frame in the signal relay area, and the signal which includes received data is transmitted in a subsequent different radio frame in the data relay area.

8. A radio relay system, comprising:
a radio terminal;
a radio base station; and
a relay station, wherein
the radio relay system performs communication between the radio terminal and the radio base station via the relay station;
the radio base station includes a radio frame generation unit which generates a radio frame including a signal relay area and data relay area, and a transmission unit which transmits the generated radio frame to the relay station, and
the relay station includes a receive unit which receives the radio frame, and a transmission unit which transmits receive signal received in the signal relay area without performing demodulation and modulation, and transmits signal which includes data received in the data relay area after performing demodulation and modulation.

9. A radio relay method for performing communication between a radio terminal and a radio base station via a relay station, comprising:
generating a radio frame including a signal relay area and data relay area, and transmitting the radio frame to the relay station, in the radio base station, and
transmitting receive signal received in the signal relay area without performing demodulation and modulation, and transmitting signal which includes data received in the data relay area after performing demodulation and modulation.
